# EUROPEAN PATENT APPLICATION

(11) **EP 1 522 796 A1**
(43) Date of publication of application: **13.04.2005**
(21) Application number: 04018741.1
(22) Date of filing: 06.08.2004
(51) Int. Cl.: F24F 1/02, F24F 1/04

(54) **Monoblock air conditioner**

(30) Priority: 07.10.2003 IT VI20030199
(71) Applicant: M.P. INTERNATIONAL S.R.L., 36016 Thiene (Vicenza) (IT)
(72) Inventor: Marchioro, Flavio, 36030 S. Vito di Leguzzano (Vicenza) (IT); Perotto, Roberto, 36015 Schio (Vicenza) (IT)
(74) Representative: Bettello, Pietro, Dott. Ing.

(57) **Abstract**

The invention concerns an apparatus for the air-conditioning of buildings, of the type used in both civil and industrial buildings, where there are lots of people, such as public offices, restaurants, banks, gyms, supermarkets, conference rooms, bars and other similar places, where the conditioning of the air in the building is required. Such an apparatus is characterised in that it constitutes a single air-conditioning group consisting of two apparatuses and precisely consisting of the air filtration apparatus and the primary air treatment apparatus.

## Description

The finding concerns an apparatus for the air-conditioning of buildings, according to the general part of claim 1.

As is well known, recent legal provisions foresee that all enclosed environments, both civil and industrial, where there are lots of people, such as public offices, restaurants, banks, gyms, supermarkets, conference rooms, bars and the like must be installed with apparatuses that take care of treating the air.

Such treatment, defined with the generic term "air-conditioning" is substantially carried out through two operations: "purification", with which the air is freed from solid substances in suspension and "primary air treatment", with which an exchange is carried out that ensures correct oxygenation of the air.

These two operations are carried out with two distinct and separate apparatuses, the purifier and the primary air treatment group.

The air purifier normally produced consists of a casing containing substantially a fan group, which takes care of moving the air flow, a filtering system equipped with various types of filters (active carbon, electrostatic cell or other types), which takes care of holding the polluting solid particles in suspension in the aforementioned flow, as well as possible pre-filters and an electronic control unit of the operation of the apparatus.

The primary air treatment group normally produced consists of a casing inside which two ducts are formed with crossing flows: a first flow consists of the polluted air that is conveyed from the building towards the outside and a second flow consists of oxygenated fresh air, also called "primary" air, which is conveyed from the outside into the building, for the necessary exchange.

The two flows cross through a heat recuperator, preferably of the lamellar type, which neutralises the thermal load, both in the winter and in the summer, and are moved by two distinct fans, one for ejecting the polluted air and the other for delivering the primary air.

In the current state of the art and according to the normal design rules of air-conditioning plants these two apparatuses are arranged separately and positioned in different places in the same building.

Such an arrangement has numerous drawbacks, which limit its diffusion and make its operation not very cost-effective.

A first drawback is of the constructive type, since it is necessary to realise two distinct circuits, one that regulates the action of the air flow to be purified and another that regulates the exchange of primary air.

A second drawback is of the operative type since, given that the two groups are separate and distinct, they cannot ensure a regular and coordinated air-conditioning action, since they operate on two completely distinct air flows.

A third drawback consists of the fact that the apparatuses, consisting of two separate casings, take up a substantial amount of space or occupy unsuitable spaces as well as very often not being very aesthetically pleasing.

The purpose of the present finding is that of realising an air-conditioning system of buildings, through the actions of purification and treatment of the primary air, which does not have the drawbacks displayed by similar known products.

A further purpose of the finding is that of realising an air-conditioning system that is able to autonomously ensure a constant purification and/or an exchange of air inside a building, ensuring the maximum of comfort to the users of the apparatus.

A further purpose of the finding is that of realising an air-conditioning system (purification/primary air treatment), which is easy to install, easy to use and of low bulk, so as to be able to be inserted in small spaces without difficulty.

Such purposes are obtained by realising an air-conditioning group containing, in a single casing, two apparatuses: the air filtration apparatus and the primary air treatment apparatus.

With such a constructive solution a so-called "mono-block" apparatus is thus realised, which externally presents itself as a single container, for example made from metal, wood or plastic and finished in whatever way, according to the aesthetic requirements of the building in which it is inserted.

Constructively, the apparatus according to the finding comprises a zone occupied by the filtering group, directly associated with a zone occupied by the primary air treatment group.

The container is equipped with ports for the passage of the two airflows, the flow rate of which is regulated through fans arranged inside of the container itself and commanded by an electronic programme that regulates its speed and the flow rate according to the conditions of pollution of the building.

Operatively, the apparatus according to the finding can act just as a purifier, just as an air exchanger or in both ways.

As an example, the apparatus according to the finding, installed for example in a restaurant, acts just as a purifier, i.e. it holds the dust in suspension, through electrostatic cells, until a sensor, inserted in the apparatus or positioned at particular points of the building, detects a dangerous percentage of toxic gases (in particular carbon dioxide) for which reason it is necessary to immediately exchange air, which is obtained by activating the air treatment group.

The apparatus according to the finding is completed with air ducts that mix the two flows, the purified flow and the air exchange flow and, in the case of connection with the outside, it is foreseen to insert pre-filters that block possible external polluting agents and it is equipped with a lamellar exchanger that ensures climatic adjustment of the air coming in, up to 75% of the air ejected, and it is equipped with three electric motors that at full speed absorb a maximum of 140 Watts.

The finding shall better understood through the description of a possible embodiment thereof, given only as a nonlimiting example, with the help of the attached tables of drawings, where:
- fig. 1 represents a perspective view of the apparatus according to the finding, in conditions of use;
- fig. 2 represents a perspective view of the apparatus according to figure 1, with the inspection hatches raised;

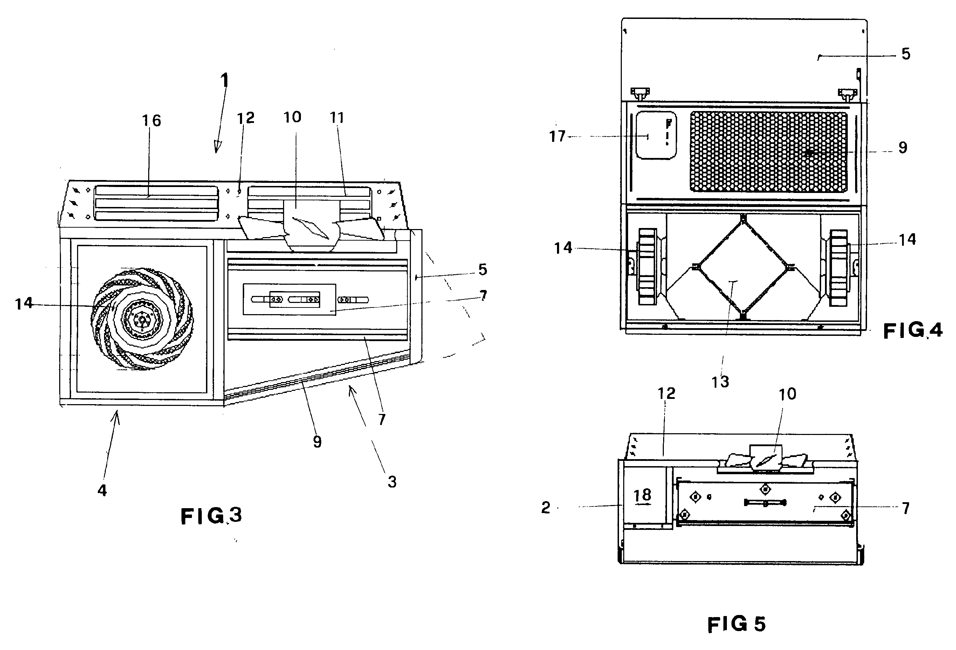

- fig. 3 represents an elevated cross section view of the apparatus according to figure 1;
- fig. 4 represents a view from below of the apparatus according to fig. 1;
- fig. 5 represents a front elevated view of the apparatus according to fig. 1.

As can be seen from the figures, the apparatus according to the finding, wholly indicated with reference numeral 1, consists of a casing 2, substantially parallelepiped in shape, inside of which the filtration group, wholly indicated with reference numeral 3, and the primary air treatment group 4 are arranged next to each other, accessible through hatches, 5 and 6 respectively.

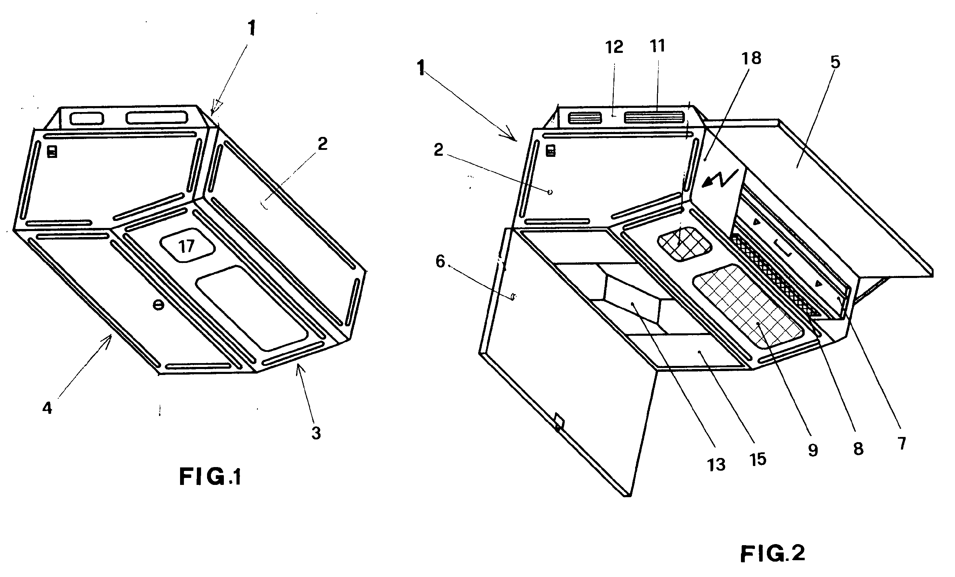

In greater detail, as can be seen in particular in fig. 2, the apparatus 1 according to the finding looks like a mono-block container inside of which are arranged the filter 7, equipped with a pre-filter 8, which purifies the air taken in from the building through the intake grid 9, and with a fan 10, which moves the purified air flow that comes out from the slits 11 present on the upper hood 12.

Still inside the mono-block apparatus 1 according to the finding are arranged the heat recuperator with crossed flows 13, of the lamellar type, flanked by the two motofans 14, inserted on the side spaces 15, which move the two airflows, specifically for the delivery of the fresh air and for the ejection of the used air, through the slits 16, made on the hood 12 itself.

The apparatus 1 is completed with the external display 17 and the electronic control unit 18 and to regulate its operation the user uses a two-channel infrared remote control, so as to be able to separately and independently regulate the two groups, the purification group and the primary air treatment group, according to what is needed to make the building more comfortable.

Of course, embodiments that are different from the one described are possible, according to the components used or the specific characteristics required from the operation, just as it is possible to equip the apparatus according to the finding with different instrumentation and regulation and control systems, known in the state of the art, without for this reason departing from the scope of the claims, defined hereafter.

## Claims

1. APPARATUS FOR THE AIR-CONDITIONING OF BUILDINGS, of the type used in both civil and industrial buildings, where there are lots of people, such as public offices, restaurants, banks, gyms, supermarkets, conference rooms, bars and other similar places, where the conditioning of the air in the building is required,
said apparatus being **characterised in that**
it constitutes a single air-conditioning group consisting of two apparatuses: the air filtration apparatus and the primary air treatment apparatus.

2. APPARATUS FOR THE AIR-CONDITIONING OF BUILDINGS, according to claim 1, **characterised in that** it constitutes a "mono-block", which externally presents itself as a single container, made from metal, wood, plastic or another material and finished in whatever way, according to the aesthetic requirements of the building in which it is inserted.

3. APPARATUS FOR THE AIR-CONDITIONING OF BUILDINGS, according to claim 1, **characterised in that** it comprises a zone occupied by the filtering group, directly associated with a zone occupied by the primary air treatment group.

4. APPARATUS FOR THE AIR-CONDITIONING OF BUILDINGS, according to claim 1, **characterised in that** the flow rate of the two airflows is regulated through fans arranged inside the container and commanded by an electronic programme that regulates its speed and flow rate according to the conditions of pollution of the building.

5. APPARATUS FOR THE AIR-CONDITIONING OF BUILDINGS, according to one or more of the previous claims, **characterised in that** it can act just as a purifier, just as an air exchanger or in both ways simultaneously.

6. APPARATUS FOR THE AIR-CONDITIONING OF BUILDINGS, according to one or more of the previous claims, **characterised in that** it is equipped with a sensor, inserted in the apparatus itself or positioned in particular points of the building, which detects the percentage of toxic gases present in the used air and possibly activates the primary air treatment apparatus for the exchange with the air from the outside.

7. APPARATUS FOR THE AIR-CONDITIONING OF BUILDINGS, according to one or more of the previous claims, **characterised in that** it is equipped with air ducts that mix the two flows, the purified flow and the air exchange flow.

8. APPARATUS FOR THE AIR-CONDITIONING OF BUILDINGS, according to one or more of the previous claims, **characterised in that**, in the connection with the outside, it is foreseen to insert pre-filters that block possible external polluting agents.

9. APPARATUS FOR THE AIR-CONDITIONING OF BUILDINGS, according to one or more of the previous claims, **characterised in that** it consists of a casing (2), substantially parallelepiped in shape, inside of which the filtration group (3), and the primary air treatment group (4) are arranged next to each other, accessible through the hatches (5, 6).

10. APPARATUS FOR THE AIR-CONDITIONING OF BUILDINGS, according to claim 9, **characterised in that** in the mono-block container are arranged the filter (7), equipped with a pre-filter (8), which purifies the air taken in from the building through the intake grid (9) and with a fan (10), which moves the purified airflow, which comes out from the slits (11) present on the upper hood (12).

11. APPARATUS FOR THE AIR-CONDITIONING OF BUILDINGS, according to claim 9, **characterised in that** in the mono-block container are arranged the heat recuperator with crossed flows (13), of the lamellar type, flanked by the two motofans (14), which move the two airflows, for the delivery of air from the outside and for ejecting the used air, through the slits (16), made on the hood (12).
